(19)

**Europäisches Patentamt**
**European Patent Office**
**Office européen des brevets**

(11)  **EP 4 776 352 A1**

(12)  **EUROPEAN PATENT APPLICATION**

(43) Date of publication:
**15.07.2026 Bulletin 2026/29**

(21) Application number: **25150685.3**

(22) Date of filing: **08.01.2025**

(51) International Patent Classification (IPC):
**H01M 8/0432** (2016.01)     **H01M 8/04007** (2016.01)
**H01M 8/04111** (2016.01)     **H01M 8/04119** (2016.01)
**H01M 8/04701** (2016.01)     **H01M 8/04014** (2016.01)

(52) Cooperative Patent Classification (CPC):
**H01M 8/04111; H01M 8/04014; H01M 8/04022;**
**H01M 8/04074; H01M 8/04141; H01M 8/0432;**
**H01M 8/04335; H01M 8/04708;** H01M 2250/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **LÖWSTEDT, Carl**
  **ONSALA (SE)**

• **MADOUAS, Edvard**
  **GÖTEBORG (SE)**
• **WIRSEN, Noah**
  **GÖTEBORG (SE)**
• **PALANIVEL, Jeeva Rajasekar**
  **BANGALORE (IN)**

(74) Representative: **Ström & Gulliksson AB**
  **P.O. Box 4188**
  **203 13 Malmö (SE)**

Remarks:
Amended claims in accordance with Rule 137(2)
EPC.

(54)  **FUEL CELL EXHAUST GAS MANAGEMENT**

(57)  Heat exchanger (30) arranged in a fuel cell system (20), comprising: an intake exhaust gas portion (32) connected to a fuel cell stack (27) of the fuel cell system (20) and adapted to receive exhaust gases generated by the fuel cell stack (27); an intake heated compressed air portion (38) connected to a compressor (23) of the fuel cell system (20) and adapted to receive heated compressed air generated by the compressor (23); and a control device (31) configured to: control a heat exchange between the received exhaust gases and the received heated compressed air based on respective temperatures, and cause recirculation of the exhaust gases to the fuel cell stack (27) based on the heat exchange control.

FIG. 2

EP 4 776 352 A1

**Description**

**TECHNICAL FIELD**

The disclosure relates generally to a fuel cell system. In particular aspects, the disclosure relates to fuel cell exhaust gas management. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

In contemporary fuel cell systems, the conversion of hydrogen into electricity generates significant amounts of exhaust gases that need to be managed. The present disclosure suggests improvements on how to manage these fuel cell exhaust gases.

**SUMMARY**

Contemporary fuel cell systems often suffer from inefficiencies due to energy requirements for cooling and the failure to harness temperature variations within the system's gases. Prior art methods, such as discharging exhaust gases as liquid water onto the road, pose risks like reduced traction and ice formation. Storing exhaust water in tanks adds cost and weight, further diminishing fuel efficiency. The present disclosure therefore seeks to address one or more of these issues.

In a first aspect of this disclosure there is provided a heat exchanger arranged in a fuel cell system, comprising: an intake exhaust gas portion connected to a fuel cell stack and adapted to receive exhaust gases generated by the fuel cell stack; an intake heated compressed air portion connected to a compressor of the fuel cell system and adapted to receive heated compressed air generated by the compressor; and a control device configured to: control a heat exchange between the received exhaust gases and the received heated compressed air based on respective temperatures, and cause recirculation of the exhaust gases to the fuel cell stack based on the heat exchange control.

The first aspect of the disclosure may seek to solve the problem of managing heat exchange and recirculation of exhaust gases in a fuel cell system. A technical benefit may include improved energy efficiency and reduced thermal losses in the fuel cell system, as well as safer operating conditions.

Optionally in some examples, including at least one preferred example, the heat exchanger further comprises an exhaust gas recirculation member via which the control device causes recirculation of the exhaust gases to the fuel cell stack. A technical benefit may include enhanced recirculation efficiency and reduced emissions.

Optionally in some examples, including at least one preferred example, the exhaust gas recirculation member is connected to the fuel cell stack via a humidifier of the fuel cell system. A technical benefit may include improved humidity control in the fuel cell system.

Optionally in some examples, including at least one preferred example, the control device comprises a temperature sensor. A technical benefit may include precise temperature monitoring for efficient heat exchange.

Optionally in some examples, including at least one preferred example, the control device comprises a flow medium control valve. A technical benefit may include enhanced control over the flow and exchange of gases and heat.

Optionally in some examples, including at least one preferred example, the heat exchanger further comprises a charge air cooler connected to the intake heated compressed air portion and adapted to receive the heated compressed air, wherein the control device is configured to control the heat exchange by controlling a coolant application of the charge air cooler based on a temperature of the heated compressed air. A technical benefit may include improved cooling efficiency and temperature regulation.

Optionally in some examples, including at least one preferred example, the control device is configured to control the coolant application by setting a first temperature limit value, allowing the heated compressed air to pass into the charge air cooler upon a temperature of the heated compressed air being below the first temperature limit value, and allowing coolant to pass into the charge air cooler upon a temperature of the heated compressed air being equal to or above the first temperature limit value. A technical benefit may include preventing potential thermal damage and maintaining performance efficiency.

Optionally in some examples, including at least one preferred example, the control device is further configured to control the coolant application by setting a second temperature limit value, the second temperature limit value being greater than the first temperature limit value, and allowing only coolant to pass into the charge air cooler upon a temperature of the heated compressed air being above the second temperature limit value. A technical benefit may include a more nuanced management strategy for the coolant application, allowing the fuel cell system to respond more precisely to varying temperature conditions of the heated compressed air.

Optionally in some examples, including at least one preferred example, the control device is further configured to obtain an ambient temperature, wherein the heat exchange control is further based on the ambient temperature. A technical benefit may include adaptive heat exchange control based on environmental conditions.

Optionally in some examples, including at least one preferred example, wherein the intake exhaust gas portion comprises: a first intake portion arranged between the fuel cell stack and a humidifier of the fuel cell system, a second intake portion arranged between the humidifier and a turbine of the fuel cell system, and a third intake portion arranged between the turbine and the heat exchanger. A technical benefit may include improved routing and management of exhaust gases.

Optionally in some examples, including at least one preferred example, further comprising a fuel cell exhaust conversion zone connected to the intake exhaust gas portion and arranged to enable absorption of heat via a heat exchange portion from the heated compressed air, said absorption of heat causing conversion of water vapor included in said received exhaust gas into steam, wherein the fuel cell exhaust conversion zone is connected to an exhaust for exhausting the steam to an external environment. A technical benefit may include enhanced conversion of water vapor to steam for improved thermal management.

Optionally in some examples, including at least one preferred example, wherein the control device is further configured to control said exhaust of steam through the exhaust to the external environment. A technical benefit may include controlled steam exhaust to prevent energy loss.

In a second aspect of this disclosure there is provided a fuel cell system comprising the heat exchanger of the first aspect.

The second aspect of the disclosure may seek to solve the problem of integrating a heat exchanger into a fuel cell system for enhanced efficiency. A technical benefit may include improved energy efficiency and reduced thermal losses in the fuel cell system, as well as safer operating conditions.

In a third aspect of this disclosure there is provided a fuel cell electric vehicle comprising the fuel cell system of the second aspect. The third aspect of the disclosure may seek to solve the problem of incorporating a fuel cell system into an electric vehicle. A technical benefit may include improved energy efficiency and reduced thermal losses in the fuel cell system, as well as safer operating conditions, leading to a reduced fuel consumption and extended range for fuel cell electric vehicles

In a fourth aspect of this disclosure there is provided a method for managing exhaust gases in a fuel cell system, comprising: receiving exhaust gases generated by a fuel cell stack of the fuel cell system; receiving heated compressed air generated by a compressor of the fuel cell system; controlling a heat exchange between the received exhaust gases and the received heated compressed air based on respective temperatures; and controlling recirculation of the exhaust gases to the fuel cell stack based on the heat exchange control.

The fourth aspect of the disclosure may seek to solve the problem of managing heat exchange and recirculation of exhaust gases in a fuel cell system. A technical benefit may include improved energy efficiency and reduced thermal losses in the fuel cell system, as well as safer operating conditions.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Examples are described in more detail below with reference to the appended drawings.

FIG. 1 is an exemplary schematic illustration of a fuel cell electric vehicle according to an example.
FIG. 2 is an exemplary schematic illustration of a fuel cell system according to an example.
FIG. 3 is an exemplary schematic illustration of a heat exchanger of a fuel cell system according to an example.
FIG. 4 is a schematic diagram of an exemplary method for managing fuel cell exhaust gases according to an example.

## DETAILED DESCRIPTION

The detailed description set forth below provides information and examples of the disclosed technology with sufficient detail to enable those skilled in the art to practice the disclosure.

The present disclosure involves approaches for addressing inefficiencies in current fuel cell systems by introducing a heat exchanger. Traditional systems often require excessive energy for cooling and fail to capitalize on the temperature variations of gases within the fuel cell system, leading to poor performance. Approaches described herein tackles these issues by integrating a heat exchanger that efficiently manages exhaust gases and heated compressed air. The heat exchanger comprises an intake exhaust gas portion connected to the fuel cell stack, which receives the exhaust gases generated during operation. In addition, the heat exchanger receives an intake heated compressed air portion being connected to a compressor for receiving the heated compressed air being produced. A control device of the heat exchanger is configured to manage the heat exchange between these two gas streams based on their respective temperatures.

This temperature-based control may not only improve the cooling process but may also facilitate the recirculation of exhaust gases back to the fuel cell stack. By recirculating the exhaust gases, the heat exchanger may enhance energy recovery and reduce the need for additional coolant, thus improving energy efficiency. Moreover, where the fuel cell system is arranged in a fuel cell electric vehicle (FCEV), the need to discharge water onto road surfaces or store it in tanks may be circumvented, thereby eliminating associated safety and environmental concerns. Unlike prior art, which often involves costly and inefficient storage or discharge methods, approaches described herein may provide a more sustainable and efficient approach to exhaust gas management. The integration of these features results in a superior system that may not only boost the performance and safety of fuel cell systems, but may also offer a viable solution to the challenges posed by increasing numbers of fuel cell systems, such as in FCEVs on the road.

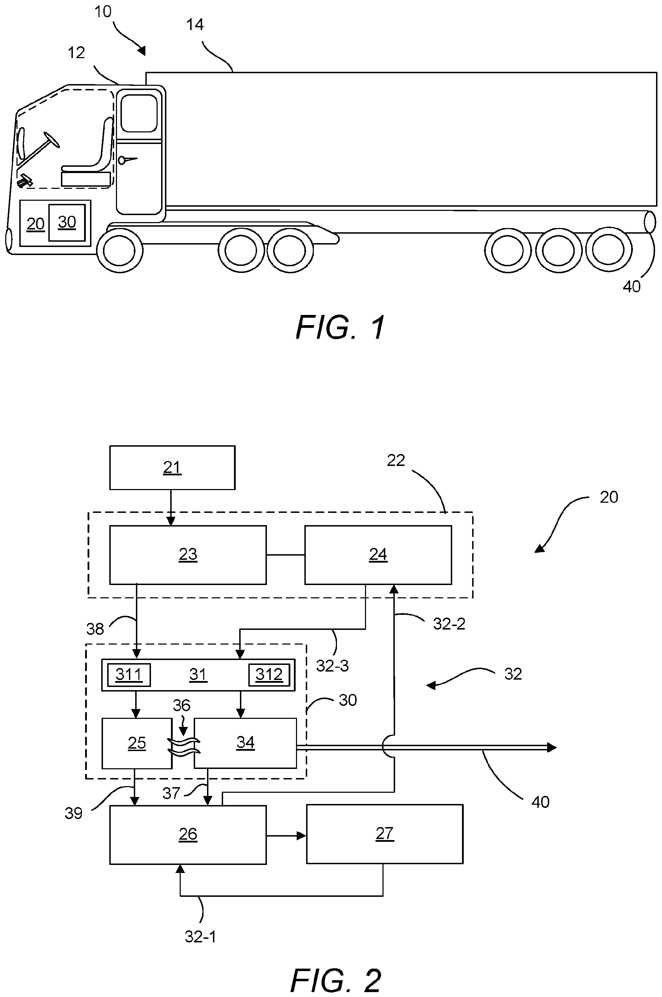

**FIG. 1** is an exemplary schematic illustration of an FCEV **10**. The FCEV **10** is illustrated as a heavy-duty vehicle, but other vehicle types may be used. The FCEV **10** comprises a tractor unit **12** which is arranged to tow a trailer unit **14.** In other examples, other heavy-duty vehicles may be employed, e.g., trucks, buses, and construction equipment. The FCEV **10** comprises vehicle units and associated functionality as would be understood and expected by a skilled person, such as a powertrain, chassis, and various control systems.

The FCEV **10** comprises a fuel cell system **20** having a fuel cell stack with a plurality of fuel cells. The fuel cell system **20** is adapted to convert chemical energy stored in a fuel, typically hydrogen, as well as an oxidizing agent, typically oxygen or air, into electricity and heat as a byproduct through continuous electrochemical reactions. The generated electric current is used to power an electric motor for propulsion purposes, charge a vehicle battery, and/or power auxiliary vehicle systems of the FCEV **10**. During the continuous electrochemical reactions, a reduction reaction occurs at the cathode where oxygen is supplied in combination with the protons and electrons from an external circuit. This reduction reaction generates exhaust gases which includes water vapour. The overall reaction discussed above can be represented according to the following: $2H_2 + O_2 \rightarrow 2H_2O$ + *electricity* + *heat.*

The present disclosure primarily addresses how to these exhaust gases can be used for improving the efficiency of the fuel cell system. Moreover, the present disclosure relate to management of the water vapour ($H_2O$) included in the exhaust gases. For hydrogen as the fuel to be consumed this is determined by the reaction above. Other fuels, such as methanol, ethanol, natural gas, propane, hydrocarbons, etc., involve their respective reactions generating water vapour as a byproduct.

Purely for exemplary purposes, the following exemplary scenario describes how much water vapour that can be generated in an operation of a FCEV. The following assumptions are considered: A standard power rating for a fuel cell stack in a standard-size heavy duty FCEV may be 100 kW, a standard time of operation about one hour, and the fuel to be consumed is hydrogen having an approximate energy content of 286 kJ. The moles of hydrogen consumed may be calculated with the following formula: $\frac{Power*Time}{Energy\ content\ of\ hydrogen} = \frac{100kW*1hour}{286kJ/mol} \approx 0.349 \text{ moles}$. With these assumptions, the volume of water vapour generated during one hour can be calculated as:

$$Volume\ of\ water\ vapour(liters) = Moles\ of\ hydrogen\ consumed * 22.4 \frac{liters}{mol} =$$

$0.349\ moles * 22.4 \frac{liters}{mol} = 7.81\ liters$. Therefore, this particular standard-size heavy-duty FCEV with a 100 kW fuel cell stack, operating for one hour, would produce approximately 7.81 liters of water vapour as a byproduct of the electrochemical reactions. Clearly, longer operation times of the FCEV or higher power ratings of the fuel cell stack would result in a higher water vapour production.

The fuel cell system **20** comprises a heat exchanger **30**. The heat exchanger **30** is a device that transfers heat between two separate streams of air (i.e., air-to-air heat exchanger), using one stream to cool or heat the other without allowing them to mix directly. The heat exchanger **30** comprises an intake exhaust gas portion and an intake heated compressed air portion. From these portions, the heat exchanger **30** receives exhaust gas generated by the fuel cell stack (the first air), as well as heated compressed air (the second air) generated by a compressor of the fuel cell system **20**.

In the context of the intake exhaust gas portion, the term "intake" refers to the process of drawing in exhaust gases that are produced as byproducts during the chemical reactions occurring within the fuel cell stack. Hence, the gases are "exhausted" in the sense that they are generated as byproducts of the fuel cell stack, and "taken in" in the sense that they are redirected to the heat exchanger **30** as intake gas. These gases, primarily including water vapor, are typically expelled as waste in conventional systems. However, in this setup, they are strategically recaptured and redirected by the heat exchanger **30.** This recirculation may be facilitated by a network of conduits and valves that guide the exhaust gases from the fuel cell stack into the intake exhaust gas portion, and then back to the fuel cell stack again. The primary purpose of this process is to utilize the residual thermal energy contained within the exhaust gases, which would otherwise be lost, thus enhancing the overall thermal management and energy efficiency of the system.

In the context of the intake heated compressed air portion, the term "intake" describes the mechanism by which this air, after being pressurized and heated during compression, is channeled into the heat exchanger **30**. The compressor increases the temperature and pressure of the air, preparing it for efficient energy transfer within the fuel cell system **20**. The intake heated compressed air portion thus serves as a conduit for this thermally enriched air, allowing it to interact with the exhaust gases in the heat exchanger **30**. The purpose of introducing heated compressed air into the fuel cell system **30** is to facilitate a controlled heat exchange process. This interaction not only aids in the cooling of the compressed air before it is used further within the system, but also improves the recovery of thermal energy. This enhances the overall efficiency and performance of the fuel cell system **20** by maintaining desirable operational temperatures and reducing the reliance on external cooling resources.

The heat exchanger **30** further comprises a control device. The control device is a component designed to regulate the heat exchange process between the exhaust gases and the heated compressed air, and to manage recirculation.

The term "control" in this context refers to the ability to modulate e.g. flow, temperature, and interaction of these gases within the heat exchanger **30** for purposes of performing thermal management.

The "recirculation" in this context indicates that the decision to recirculate the exhaust gases is informed by the conditions and outcomes of the heat exchange process, such as the temperature differential between the exhaust gases and the compressed air and/or thermal energy requirements of the fuel cell system **20**. This may be achieved by utilizing sensors and feedback mechanisms adapted to continuously monitor the temperatures and flow rates within the heat exchanger, including but not limited to pressure sensors, flow meters, microcontrollers, processors (e.g. PLC, CPU, DSP), FPGA, ASIC or any other suitable digital and/or analog circuitry capable of performing the intended control function. For example, if the temperature of the exhaust gases reaches a certain limit value indicating sufficient thermal energy, the control device may trigger a valve or actuator to redirect these gases back to the fuel cell stack. The opposite applies as well, i.e., block gases from entering certain conduits or subsystems.

In some examples, the heat exchanger **30** may be able to enable absorption of heat to cause water vapour included in the exhaust gases to be converted into steam. The heat exchanger **30** may then be adapted to exhaust the steam to an external environment. This functionality may be supervised by the control device. An "external environment" refers to the space outside of the fuel cell system. For example, in an FCEV **10**, this environment encompasses the open air into which an exhaust **40** of the FCEV **10**, such as a tailpipe or alternative exhaust component, releases steam or other byproducts of the operation of the fuel cell system **20**.

Exhausting the steam may be done via the exhaust **40** of the FCEV **10**. The exhaust **40** may be one or more of tailpipes, venting systems, diffuser devices, permeable membranes, and other gas conveying devices. If the exhaust **40** is already arranged in the FCEV **10**, the heat exchanger **30** may comprise a steam conveying portion mounted between the heat exchanger **30** and the exhaust **40** for intermittent delivery of the steam from the heat exchanger **30** to the exhaust **40**. In other examples the exhaust **40** may be an auxiliary component mounted to the heat exchanger **30** at a first end arranged to extend towards the external environment at a second end for transferring the steam from the heat exchanger **30** directly to the external environment. In these examples the steam conveying portion is the exhaust **40**.

**FIG. 2** is a more detailed schematic illustration of the fuel cell system **20** according to some examples. The heat exchanger **30** is arranged in the fuel cell system **20** and configured to function generally according to what was discussed in relation to **FIG. 1**. Before delving into details of the heat exchanger **30**, the context in which it is designed to operate will now be explained with reference to the other components of the fuel cell system **20**.

The fuel cell system **20** comprises several interconnected components working together to manage air intake, compression, cooling, humidity adjustment, and electrochemical reactions. At the forefront is an air filter **21**, responsible for cleansing incoming air to safeguard a fuel cell stack **27** from impurities. This filtered air is then directed to an electric turbocharger **22**, housing a compressor **23** and a turbine **24**. The electric turbo charger **22** is arranged to manage air supply. The compressor **23** pressurizes and compresses the filtered air, enhancing electrochemical reaction efficiency within the fuel cell stack **27**. Simultaneously, the turbine **24**, driven by exhaust gases from the fuel cell stack **27**, recovers energy to drive the compressor **23**. In the process of compression within the electric turbocharger **22**, the air experiences an increase in temperature. When air is compressed, its molecules are forced closer together, resulting in an increase in kinetic energy, which manifests as heat. This phenomenon may be described by Boyle's Law, which states that the pressure of a gas is inversely proportional to its volume when the temperature is held constant. Therefore, as the volume of air decreases during compression, its pressure and temperature increase.

Following compression, the heated compressed air passes through a charge air cooler **25** (often used interchangeably with intercooler in the context of fuel cell systems), where it undergoes cooling before entering the fuel cell stack **27**. Cooling is important for maintaining desirable operating conditions within the fuel cell stack **27**. This cooling process may involve a dedicated coolant loop circulating through a pump, heat exchanger, and coolant fluid. The coolant absorbs heat from the heated compressed air within the charge air cooler **25.**

Subsequently, the cooled and pressurized air proceeds via an air conveying member **39** to a humidifier **26,** which adjusts its moisture content before entering the fuel cell stack **27.** Proper humidity levels are important for efficient operation, particularly for certain types of fuel cells like Solid Oxide Fuel Cells (SOFCs). The humidifier **26** balances the moisture content using water vapor produced by the fuel cell stack **27** and introduced from the air supply system (i.e., the electric turbocharger **22** via the charge air cooler **25**). Consequently, properly humidified air is delivered to the fuel cell stack **27** where the electrochemical reactions discussed above occur, converting fuel and oxidant into electricity, water vapor, and heat.

A novel component of this disclosure is the heat exchanger **30** depicted in **FIG. 2** adapted to control a heat exchange process between the received gases, and cause recirculation of the exhaust gases based on said heat exchange process. As discussed above, the heat exchanger **30** comprises an intake exhaust gas portion **32** which is connected to the fuel cell stack **27.** The heat exchanger also comprises an intake heated compressed air portion **38.** "Connected" shall in these contexts be understood as being fluidly (the term gaseously is sometimes used) connected to, or in fluid communication with, other components, in this case the fuel cell stack **27** and the compressor **23,** respectively, for receiving air therefrom.

In this example the intake water vapour portion **32** comprises first **32-1,** second **32-2** and third **32-3** intake portions. The first intake portion **32-1** is arranged between the fuel cell stack **27** and the humidifier **26.** The second intake portion **32-2** is arranged between the humidifier **26** and the turbine **24.** The third intake portion **32-3** is arranged between the turbine **24** and the heat exchanger **30.** This particular arrangement of the intake water vapour portion **32** allows the humidifier **27** to balance the moisture content using water vapor produced both by the fuel cell stack **27.** Moreover, it supplies desired exhaust gases including the water vapour to drive the turbine **24,** and finally delivers the exhaust water vapour to the heat exchanger **30** for a heat exchange process.

The heat exchanger **30** also comprises a control device **31.** The control device **31** may be configured to control the heat exchange process by way of controlling the charge air cooler **25,** more specifically its application of coolant. The control of the coolant application refers to the regulation of the flow and distribution of a cooling fluid-typically a liquid such as water or a mixture with antifreeze properties-through the charge air cooler **25.** The control device **31** can achieve this by utilizing a sensor, such as a temperature sensor **311,** to monitor the temperature of the heated compressed air as it exits the intake exhaust gas portion **32.**

The temperature sensor **311** may be a thermocouple or infrared sensor. The temperature sensor **311** provides real-time data on the temperatures of the gases entering, and optionally also and exiting, the heat exchanger **30.** This data can allow the control device **30** to dynamically adjust flow rates and other parameters.

In other configurations, a temperature sensor **311** might not be necessary if the heat exchanger **30** relies on predefined operating conditions or environmental feedback. In such cases, the control device **30** might utilize pressure sensors or flow meters to estimate temperature indirectly and control the heat exchange process accordingly.

Based on this temperature data, the control device **31** adjusts the flow rate, direction, or volume of coolant being circulated through the charge air cooler **25.** This adjustment can be executed through a flow medium control valve **312** that controls the entry and exit of coolant in a cooling circuit of the charge air cooler **25.** By modulating the flow of exhaust gases and compressed air, the flow medium control valve **312** can maintain desired temperatures and pressures. In some systems, the control device **31** may employ a feedback loop, using real-time temperature readings to dynamically adjust the cooling parameters.

The control device **31** may also include a variable speed fan, capable of altering the airflow dynamics within the heat exchanger **30.**

The control device may also include a damper, capable of adjusting one or more passageway openings to control gas flow.

The variable speed fan and/or the damper may operate in conjunction with or independently of the flow medium control valve **312** for purposes of fine-tuning the heat exchange process.

The control device **31** may be configured to manage the coolant application by employing a specific temperature control strategy. In this strategy, a first temperature limit value is set. This is a predetermined threshold temperature that dictates how the heat exchanger **30** responds to the temperature of the heated compressed air. This value may be set based on the desirable operational requirements of the fuel cell system **20** and acts as a benchmark for initiating control actions. When the temperature of the heated compressed air is below the first temperature limit value, the control device **31** allows the heated compressed air to pass into the charge air cooler **25** without activating the coolant flow. This is because, at lower temperatures, the heated compressed air can be adequately cooled through passive or natural heat dissipation, saving energy by not engaging the coolant system unnecessarily. Conversely, when the temperature of the heated compressed air reaches or exceeds the first temperature limit value, the control device **31** allows the coolant to pass into the charge air cooler **25.** This activation is performed because of the realization that higher temperatures require active cooling to ensure the air is brought to an acceptable level for efficient operation of the fuel cell system **20,** preventing potential thermal damage and maintaining performance efficiency.

In a concrete example with purely exemplary limit values, the first temperature limit value could be set at 110°C. If the heated compressed air is measured at 105°C, it is allowed to proceed into the charge air cooler **25** without activating coolant flow, as the air is within a range that can be managed by ambient conditions or low cooling. However, if the temperature were to rise to 115°C, the control device **31** would trigger the coolant valves to open, allowing coolant to circulate through the cooler and actively reduce the air temperature to prevent overheating and maintain desirable system performance.

In some examples, the temperature control strategy may be complemented by a second temperature limit value. In this configuration, the control device **31** is equipped with an additional layer of control. The second temperature limit value may be set similarly to the first temperature limit value, and is greater than the first temperature limit value. The introduction of this second limit provides a more nuanced management strategy for the coolant application, allowing the fuel cell system **20** to respond more precisely to varying temperature conditions of the heated compressed air. The first temperature limit value is used to determine when to initiate the flow of coolant alongside the passage of heated compressed air, as previously described. However, when the temperature of the compressed air exceeds this first limit and approaches even higher levels, the second temperature limit comes into play. The second temperature limit value is set at a higher threshold to ensure that when the air temperature surpasses this point, the control device **31** prioritizes cooling by allowing only the coolant to pass through the charge air cooler. This action may more rapidly reduce the air temperature, as it indicates a condition where the thermal load is sufficiently high to potentially affect performance or safety of the fuel cell system **20** if not addressed promptly.

In the concrete example above, the second temperature limit value could be set at 130°C. The control device **31** would accordingly operate as follows: With air temperatures between 115°C and 130°C, both air and coolant would pass into the charge air cooler to manage moderate overheating. However, if the air temperature rises above 130°C, the second limit comes into play, and the control device **31** thus escalates the cooling response by allowing only the coolant to pass and not the air, ensuring increased cooling efficiency to quickly bring the temperature down to safe levels. This tiered approach can allow the fuel cell system **20** to manage energy use and maintain performance across a wider range of operating conditions.

In some examples, the control device **31** may be further enhanced by incorporating ambient temperature into its decision-making process. The ambient temperature refers to the temperature of the surrounding environment where the fuel cell system **20** operates, which may influence the overall thermal management strategy of the system. By obtaining the ambient temperature, the control device **31** can adjust the heat exchange process more dynamically and accurately. The ambient temperature may provide context for how aggressively the control device **31** needs to manage the heat exchange. For instance, in cooler ambient conditions, the need for active cooling might be reduced, as the natural environment aids in dissipating heat. Conversely, in hotter conditions, the fuel cell system **20** may need to employ more rigorous cooling measures to maintain desirable performance.

The first temperature limit, and optionally also the second temperature limit, may be set based on the ambient temperature. For example, if the ambient temperature is a relatively cool 10°C, the control device **31** might allow for a higher first temperature limit, understanding that the cooler environment will naturally aid in heat dissipation. Alternatively, if the ambient temperature is a relatively high 40°C, the control device **31** might lower the first temperature limit to initiate cooling sooner, ensuring the fuel cell system **20** does not overheat despite the warm external conditions. This adaptive control can ensure that the heat exchanger **30** operates efficiently across a range of environmental conditions.

In order to cause the recirculation of the exhaust gases based on the heat exchange control, the heat exchanger **30** may include an exhaust gas recirculation member **37**. The exhaust gases may be recirculated via said member **37** to the fuel cell stack **27**. Recirculating, in this context, means redirecting the exhaust gases from the outlet of the fuel cell stack **27** through a return path within the fuel cell system **20**, ultimately leading back to the inlet of the fuel cell stack **27**. This process allows harnessing the residual thermal energy present in the exhaust gases, which would otherwise be wasted if simply expelled from the FCEV **10**.

This process can be repeated one or more times until desirable cooling and/or heat exchange is achieved.

The exhaust gas recirculation member **37** may comprise a network of conduits or piping. These conduits may be designed to withstand the specific conditions of the exhaust gases, such as temperature and pressure. In some configurations, the exhaust gas recirculation member **37** might include additional components like valves, sensors, or flow regulators to manage the recirculation process. The exhaust gas recirculation member **37** may connect the heat exchanger **30** directly to the fuel cell stack **27** or route through a humidifier **26** (as seen in **FIG. 2**).

In addition to the heat exchange control and redirection of exhaust gases, the heat exchanger **30** may include functionality for converting at least portions of water vapour in the exhaust gases into steam. As discussed above, exhaust gases are primarily composed of water vapour. While recirculating these gases can enhance energy recovery and efficiency, converting some of the water vapor into steam and releasing it can be advantageous for several reasons.

Firstly, by converting water vapor to steam, the system can effectively manage the moisture content within the fuel cell system. Excess moisture can lead to operational inefficiencies, such as flooding within the fuel cell stack, which can impair performance. By allowing some of the water vapor to be converted to steam and released, the fuel cell system **10** can maintain a desirable balance of humidity, ensuring that the fuel cell stack **27** operates efficiently without excess moisture.

Secondly, the release of steam can help manage the thermal load of the fuel cell system **20**. As steam carries away thermal energy, it can aid in the cooling process, preventing overheating and reducing the reliance on other cooling mechanisms. This can be beneficial in scenarios where the fuel cell system **20** is under high thermal stress or operating in warmer ambient conditions. Furthermore, the ability to release steam instead of recirculating all the exhaust gases can simplify the recirculation process. By reducing the volume of gases that need to be recirculated, the fuel cell system **20** can be more efficient in directing the remaining gases back into the fuel cell stack, potentially reducing the complexity and size of the recirculation components.

Overall, this additional functionality can provide flexibility in managing both the thermal and humidity aspects of the fuel cell system **20,** contributing to improved efficiency, performance, and potentially extending the lifespan of the fuel cell stack **27** by mitigating risks associated with excess moisture and heat.

The process of converting water vapour into steam may be supervised by (i.e., by control of) the control device **31**. By supervising this process, the control device **31** can ensure that the conversion happens under desirable conditions. The control device **31** may be configured to regulate air flow, which involves controlling the amounts and timing of air introduced into the heat exchanger **30**. By adjusting these parameters, the control device **31** can influence the rate and extent of water vapor conversion into steam. For instance, by modulating the airflow, the control device **31** can control the temperature and pressure conditions within the heat exchanger **30,** which are important factors in determining how much water vapor is converted into steam.

By managing the conversion process, the control device **31** can prevent excessive moisture from accumulating within the fuel cell stack **27,** thus aiding to avoid conditions that could lead to flooding, Moreover, the controlled release of steam can aid in dissipating excess heat, reducing the thermal load on the fuel cell system **20** and reducing the risk of overheating. Moreover, by determining the timing of air introduction, the control device **31** can synchronize the steam release with operational demands of the fuel cell system **20**. For example, during periods of high power output, the fuel cell system **20** may generate more heat, necessitating greater steam release to maintain balance. Conversely, during lower demand, the fuel cell system **20** can reduce steam conversion, conserving energy. Advantageously, the management of the conversion process works in tandem with the management of the heat exchange and recirculation process, to achieve synergistic effects of improved safety and system efficiency.

In order to manage water vapour conversion, the heat exchanger **30** may include a fuel cell exhaust conversion zone **34,** which is shown in **FIG. 2.** The fuel cell exhaust conversion zone **34** is connected to the intake water vapour portion **32**. Connected here also means fluidly connected or in fluid communication. The fuel cell exhaust conversion zone **34** is arranged to enable absorption of heat via a heat exchange portion **36**. This is done by heat transfer from the heated compressed air generated by the compressor **23**. Hence, the fuel cell exhaust conversion zone **34** is arranged to cause a transfer of heat from a hotter medium, i.e., the heated compressed air, to a cooler medium, i.e., the water vapour in the exhaust gases. This relation is generally caused in accordance with the second law of thermodynamics describing the direction of natural heat flow in a closed system.

While the exact temperatures of the different mediums may vary, it shall be understood that the temperature of the heated compressed air is higher than the temperature of the exhaust water vapour for this to work. In some typical fuel cell system configurations, the temperature of the exhaust water vapour is a maximum of 60 °C, and the temperature of the heated compressed air is approximately between 100 °C and 140 °C. This may differ from one fuel cell configuration to another depending on factors including but not limited to operating conditions of the fuel cell system, efficiency of the fuel cell system, heat exchange mechanisms, fuel compositions, cooling systems, system design, ambient temperature, or the like.

As seen in **FIG. 2,** the fuel cell exhaust conversion zone **34** may be arranged adjacent to the charge air cooler **25,** the charge air cooler **25** being connected to an intake heated compressed air portion **38** adapted to receive the heated compressed air from the compressor **23**. To this end, the charge air cooler **25** is arranged downstream the compressor **23,** and the heat exchanger **30** downstream the fuel cell stack **27,** optionally intermittently via the humidifier **26** and the turbine **24** as is shown in **FIG. 2.** The heat exchange portion **36** is thereby formed in between the charge air cooler **25** and the fuel cell exhaust conversion zone **34** of the heat exchanger **30**.

In some examples, the heated compressed air dissipates heat to the exhaust water vapour via the heat exchange portion **36.** This has two effects; firstly, it enables the exhaust water vapour to be heated such that it is eventually evaporated into steam; secondly, it enables the heated compressed air to be cooled. The first effect effectively provides a way of mitigating water spillage on roads and eliminates the need for an external water tank. The second effect prepares the compressed air for improved temperature upon a subsequent entrance to the fuel cell stack **27** such as to avoid damages to the membrane of the fuel cell stack **27.** The provisioning of the heat exchanger **30** therefore serves a dual purpose, both of which are beneficial to the safety and performance of the fuel cell system **20**.

In the examples above, the heat dissipated from the heated compressed air to the exhaust water vapour may serve as an air cooling functionality of the charge air cooler **25.** To this end, the fuel cell system **20** may not require as much cooling as traditional methods, since part of the heat from the compressed air is used to convert the water vapour into steam rather than being solely dissipated through conventional cooling means. This may reduce the cooling demand on the charge air cooler **25.**

In the examples above, the air cooling functionality may depend on inlet temperature requirements of cooled compressed air to the humidifier **26.** As discussed above, the cooled and pressurized air proceeds to the humidifier **26,** which adjusts its moisture content before entering the fuel cell stack **27.** By controlling the air cooling functionality based on requirements of the cooled compressed air to the humidifier **26,** an efficiency of the fuel cell system **20** may be improved. This precision in temperature control may ensure that the fuel cell system **20** can operate without overcooling or undercooling, thereby maintaining energy efficiency.

For example, if a maximum temperature allowed for the inlet air into the fuel cell stack **27** is set to 120 °C and the temperature of the heated compressed air is at 140 °C when it leaves the compressor **23,** the charge air cooler **25** does not require that much cooling to adjust the temperature of the heated compressed air for preparation before the fuel cell stack **27.** In this example, less coolant is therefore needed, which means that the air cooling functionality can be conveniently replaced by the heat exchange portion **36.**

In another example, if the maximum temperature allowed for the inlet air into the fuel cell stack **27** is set to 80 °C and the temperature of the heated compressed air is at 140 °C when it leaves the compressor **23,** the charge air cooler **25** needs more cooling to adjust the temperature of the heated compressed air for preparation before the fuel cell stack **27.** In this example, higher cooling is needed (relative the example above) which means that the heat exchange portion **36** can at least complement the coolant used by the charge air cooler **25.** Any other similar examples may be envisaged, ranging between a complete replacement to a minor complementing cooling property. Of course, this may also depend on properties of the respective designs of the charge air cooler **25** and the heat exchanger **30.**

Where the fuel cell system **20** is arranged in an FCEV, such as the FCEV **10,** the fuel cell exhaust conversion zone **34** may be connected to the exhaust **40** of the FCEV **10** for exhausting the steam to an external environment. This can generally be done according to what was discussed above with reference to **FIG. 1.**

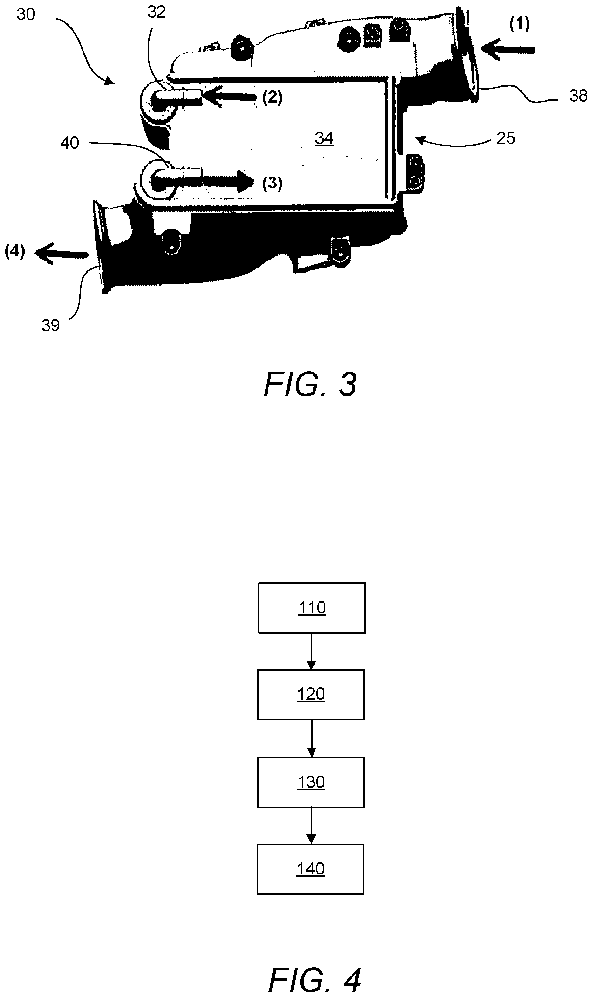

With further reference to **FIG. 3,** the heat exchanger **30** as discussed in **FIG. 2** is shown according to another example. The heat exchanger **30** in this example comprises a system of piping that serve to transport different mediums - specifically, heated compressed air and water vapour. These piping are designed with considerations for size, shape, diameter, thermal conductivity, insulation materials, flow rates, and temperature differences, all of which can be tailored to the specific needs of the fuel cell system **20** and adapted for performance purposes.

The heat exchanger **30** has two main inputs: the first is an intake **38** for heated compressed air shown at (1), which is arranged downstream the compressor **23.** The second input is an intake **32** for exhaust gas (including water vapour) shown at (2) as a byproduct of the fuel cell stack **27.** The water vapour is directed towards the fuel cell exhaust conversion zone **34.** Within this conversion zone **34,** a heat exchange process occurs. The heat from the hot medium, which is the heated compressed air, is transferred to the cold medium, the water vapour. This not only cools the air but also ensures that the water vapour is heated sufficiently to transform into steam. The design may be such that the piping of the exhaust conversion zone **34** is integrated with the piping of the charge air cooler **25,** allowing for a heat exchange portion **36** to be established where they run alongside each other.

The piping may run alongside each other in a downstream direction of the fuel cell system **20,** e.g. extending from an input of the hot compressed air and cold exhaust air at (1) and (2), towards an output of the hot exhaust air and cold compressed air at (3) and (4). The piping may run substantially in parallel with respect to one another. The respective piping may be routed in any suitable way such that the heat of their respective mediums can be transferred therebetween.

In some examples, the heat exchanger **30** may introduce a feedback loop system. The feedback loop system may comprise respective piping so as to redirect the outputted cold compressed air at (4) back to the hot compressed air input at (1), and to redirect the hot exhaust air (3) back to the cold exhaust air (2). The feedback loop system may be of use shall there be any issues with the system such that it for some reason fails to accurately exchange the heat. Another reason may be due to excessive temperature for either mediums (either too cold or too hot) which can cause an incomplete transfer of heat therebetween. The water vapour and compressed air may thus re-enter respective inputs at (1) and (2) for a chance to repeat the procedure.

The heat exchanger **30** concludes with two outputs. The first output is the exhaust **40** of the FCEV **10** shown at (3) as discussed herein through which the converted steam is safely expelled to an external environment for mitigating the risk of discharging liquid water onto the road. The second output is an air conveying member **39** shown at (4) that leads to the humidifier **26,** where the now-cooled air is humidified for usage in the fuel cell stack **27.**

The absorption of heat by the colder medium from the hotter medium may depend on a variety of different factors. The adaptability of the heat exchanger **30** to such modifications underscores its versatility and the potential for customization in fuel cell systems.

In some examples, the absorption depends on a thermal conductivity of a material of the piping. Materials with high thermal conductivity (e.g. copper or aluminum) are excellent at transferring heat and are typically used in situations where quick and efficient heat exchange is desired. On the other end of the spectrum, materials with lower thermal conductivity (e.g. stainless steel or certain plastic composites) might be used.

In some examples, the absorption depends on a diameter of the piping. For instance, larger diameter pipes may allow a greater volume of air or water vapour to flow through, potentially increasing the contact area for heat exchange. Conversely, smaller diameter piping could restrict flow but may enhance the rate of heat transfer if the medium is forced through at a higher velocity.

In some examples, the absorption depends on a length of the piping. Longer pipes provide more surface area for heat exchange, potentially leading to more efficient absorption of heat from one medium to another. However, if too long, the piping could result in unnecessary pressure drops or heat losses. Shorter piping, on the other hand, might offer less resistance and reduce heat loss but may also limit the time available for heat exchange.

In some examples, the absorption depends on an insulation of the piping. High-quality insulation can prevent heat loss to the environment, ensuring that the maximum amount of heat is transferred between the mediums within the piping. Different insulation materials and thicknesses can be used depending on the desired degree of thermal protection. Insulation materials may include fiberglass or polyurethane foam, etc.

In some examples, the absorption depends on a flow rate of the mediums inside the piping. Higher flow rates can lead to increased turbulence, enhancing the heat transfer rate. However, too high a flow rate might result in less effective heat absorption if the mediums do not have sufficient time to exchange heat. Conversely, a lower flow rate might allow for more thorough heat exchange but could result in lower overall system efficiency.

In some examples, the absorption depends on a temperature difference between the respective mediums inside the piping. A greater temperature differential can accelerate the heat absorption, as heat naturally flows from a hotter to a cooler medium. A smaller temperature difference might require more time or a larger surface area for the same level of heat absorption.

In some examples, the absorption depends on properties of the fuel cell system **20.** This may include the specific design of the fuel cell system **20,** the materials used, and the operating pressure and temperature conditions. Each of these properties can influence the rate at which heat is generated and needs to be absorbed by the system.

In some examples, the absorption depends on ambient conditions of the fuel cell system **20.** For example, the external temperature, humidity, and even the presence of wind can affect how the system absorbs and dissipates heat. In colder climates, for example, the ambient conditions might enhance the cooling of the piping, while in hotter environments, additional measures might be needed to ensure efficient heat absorption.

**FIG. 4** is a schematic diagram of an exemplary method **100** for managing exhaust gases in a fuel cell system. The method **100** comprises receiving **110** exhaust gases generated by a fuel cell stack. The method **100** comprises receiving **120** heated compressed air generated by a compressor of the fuel cell system. The method **100** comprises controlling **130** a heat exchange between the received exhaust gases and the received heated compressed air based on respective temperatures. The method **100** comprises controlling **140** recirculation of the exhaust gases to the fuel cell stack based on the heat exchange control. At least steps **130** and **140** of the method **100** can be controlled by a control device, for example the control device **31** discussed herein.

Example 1: Heat exchanger (30) arranged in a fuel cell system (20), comprising: an intake exhaust gas portion (32) connected to a fuel cell stack (27) of the fuel cell system (20) and adapted to receive exhaust gases generated by the fuel cell stack (27); an intake heated compressed air portion (38) connected to a compressor (23) of the fuel cell system (20) and adapted to receive heated compressed air generated by the compressor (23); and a control device (31) configured to: control a heat exchange between the received exhaust gases and the received heated compressed air based on respective temperatures, and cause recirculation of the exhaust gases to the fuel cell stack (27) based on the heat exchange control.

Example 2: The heat exchanger (30) of Example 1, further comprising an exhaust gas recirculation member (37) via which the control device (31) causes recirculation of the exhaust gases to the fuel cell stack (27).

Example 3: The heat exchanger (30) of Example 2, wherein the exhaust gas recirculation member (37) is connected to the fuel cell stack (27) via a humidifier (26) of the fuel cell system (20).

Example 4: The heat exchanger (30) of any of Examples 1-3, wherein the control device (31) comprises a flow medium control valve (312).

Example 5: The heat exchanger (30) of any of Examples 1-4, wherein the control device (31) comprises a temperature sensor (311).

Example 6: The heat exchanger (30) of any of Examples 1-5, further comprising a charge air cooler (25) connected to the intake heated compressed air portion (38) and adapted to receive the heated compressed air, wherein the control device (31) is configured to control the heat exchange by controlling a coolant application of the charge air cooler (25) based on a temperature of the heated compressed air.

Example 7: The heat exchanger (30) of Example 6, wherein the control device (31) is configured to control the coolant application by: setting a first temperature limit value, allowing the heated compressed air to pass into the charge air cooler (25) upon a temperature of the heated compressed air being below the first temperature limit value, and allowing coolant to pass into the charge air cooler (25) upon a temperature of the heated compressed air being equal to or above the first temperature limit value.

Example 8: The heat exchanger (30) of Example 7, wherein the control device (31) is further configured to control the coolant application by: setting a second temperature limit value, the second temperature limit value being greater than the first temperature limit value, and allowing only coolant to pass into the charge air cooler (25) upon a temperature of the heated compressed air being above the second temperature limit value.

Example 9: The heat exchanger (30) of any of Examples 7-8, wherein the control device (31) is further configured to obtain an ambient temperature and set at least one of the temperature limit values based on the ambient temperature.

Example 10: The heat exchanger (30) of any of Examples 1-9, wherein the control device (31) is further configured to obtain an ambient temperature, wherein the heat exchange control is further based on the ambient temperature.

Example 11: The heat exchanger (30) of any of Examples 1-10, wherein the intake exhaust gas portion (32) and the intake heated compressed air portion (38) comprises piping.

Example 12: The heat exchanger (30) of Example 11, wherein the control device (31) is configured to control the heat exchange based on one or more of a: thermal conductivity of a material of the piping, a diameter of the piping, an insulation of the piping, a flow rate of respective medium inside the piping, a temperature difference between the exhaust gases and the heated compressed air, properties of the fuel cell system (20), and ambient conditions of the fuel cell system (20).

Example 13: The heat exchanger (30) of any of Examples 1-12, wherein the intake exhaust gas portion (32) comprises: a first intake portion (32-1) arranged between the fuel cell stack (27) and a humidifier (26) of the fuel cell system (20), a second intake portion (32-2) arranged between the humidifier (26) and a turbine (24) of the fuel cell system (20), and a third intake portion (32-3) arranged between the turbine (24) and the heat exchanger (30).

Example 14: The heat exchanger (30) of any of Examples 1-13, further comprising a fuel cell exhaust conversion zone (34) connected to the intake exhaust gas portion (32) and arranged to enable absorption of heat via a heat exchange portion (36) from the heated compressed air, said absorption of heat causing conversion of water vapour included in said received exhaust gas into steam, wherein the fuel cell exhaust conversion zone (34) is connected to an exhaust (40) for exhausting the steam to an external environment.

Example 15: The heat exchanger (30) of Example 14, wherein the control device (31) is further configured to control said exhaust of steam through the exhaust (40) to the external environment.

Example 16: The heat exchanger (30) of any of Examples 14-15, wherein the fuel cell exhaust conversion zone (34) comprises piping extending alongside piping of a charge air cooler (25), the heat exchange portion (36) being formed between the piping of the fuel cell exhaust conversion zone (34) and the charge air cooler (25) where they extend alongside one another.

Example 17: The heat exchanger (30) of Example 16, wherein the piping extend alongside one other in a downstream direction of the fuel cell system (20).

Example 18: The heat exchanger (30) of any of Examples 16-17, wherein the piping extend alongside one another in a meander-shaped pattern.

Example 19: The heat exchanger (30) of any of Examples 1-18, wherein the temperature of the exhaust gases is a maximum of 60 °C.

Example 20: The heat exchanger (30) of any of Examples 1-19, wherein the temperature of the heated compressed air is approximately between 100 °C and 140 °C.

Example 21: A fuel cell system (20) comprising the heat exchanger (30) of any of Examples 1-20.

Example 22: A fuel cell electric vehicle (10) comprising the fuel cell system (20) of Example 21.

Example 23: A method (100) for managing exhaust gases in a fuel cell system (20), the method (100) comprising: receiving (110) exhaust gases generated by a fuel cell stack (27) of the fuel cell system (20); receiving (120) heated compressed air generated by a compressor (23) of the fuel cell system (20); controlling (130) a heat exchange between the received exhaust gases and the received heated compressed air based on respective temperatures; and controlling (140) recirculation of the exhaust gases to the fuel cell stack (27) based on the heat exchange control.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1.  Heat exchanger (30) arranged in a fuel cell system (20), comprising:

    an intake exhaust gas portion (32) connected to a fuel cell stack (27) of the fuel cell system (20) and adapted to receive exhaust gases generated by the fuel cell stack (27);
    an intake heated compressed air portion (38) connected to a compressor (23) of the fuel cell system (20) and adapted to receive heated compressed air generated by the compressor (23); and
    a control device (31) configured to:

        - control a heat exchange between the received exhaust gases and the received heated compressed air based on respective temperatures, and
        - cause recirculation of the exhaust gases to the fuel cell stack (27) based on the heat exchange control.

2.  The heat exchanger (30) of claim 1, further comprising an exhaust gas recirculation member (37) via which the control device (31) causes recirculation of the exhaust gases to the fuel cell stack (27).

3.  The heat exchanger (30) of claim 2, wherein the exhaust gas recirculation member (37) is connected to the fuel cell stack (27) via a humidifier (26) of the fuel cell system (20).

4.  The heat exchanger (30) of any of claims 1-3, wherein the control device (31) comprises a temperature sensor (311).

5.  The heat exchanger (30) of any of claims 1-4, wherein the control device (31) comprises a flow medium control valve (312).

6.  The heat exchanger (30) of any of claims 1-5, further comprising a charge air cooler (25) connected to the intake heated compressed air portion (38) and adapted to receive the heated compressed air, wherein the control device (31) is configured to control the heat exchange by controlling a coolant application of the charge air cooler (25) based on a temperature of the heated compressed air.

7.  The heat exchanger (30) of claim 6, wherein the control device (31) is configured to control the coolant application by:

    setting a first temperature limit value,
    allowing the heated compressed air to pass into the charge air cooler (25) upon a temperature of the heated compressed air being below the first temperature limit value, and
    allowing coolant to pass into the charge air cooler (25) upon a temperature of the heated compressed air being equal to or above the first temperature limit value.

8.  The heat exchanger (30) of claim 7, wherein the control device (31) is further configured to control the coolant application by:

setting a second temperature limit value, the second temperature limit value being greater than the first temperature limit value, and
allowing only coolant to pass into the charge air cooler (25) upon a temperature of the heated compressed air being above the second temperature limit value.

9. The heat exchanger (30) of any of claim 1-8, wherein the control device (31) is further configured to obtain an ambient temperature, wherein the heat exchange control is further based on the ambient temperature.

10. The heat exchanger (30) of any of claims 1-9, wherein the intake exhaust gas portion (32) comprises:

a first intake portion (32-1) arranged between the fuel cell stack (27) and a humidifier (26) of the fuel cell system (20),
a second intake portion (32-2) arranged between the humidifier (26) and a turbine (24) of the fuel cell system (20), and
a third intake portion (32-3) arranged between the turbine (24) and the heat exchanger (30).

11. The heat exchanger (30) of any of claim 1-10, further comprising a fuel cell exhaust conversion zone (34) connected to the intake exhaust gas portion (32) and arranged to enable absorption of heat via a heat exchange portion (36) from the heated compressed air, said absorption of heat causing conversion of water vapour included in said received exhaust gas into steam, wherein the fuel cell exhaust conversion zone (34) is connected to an exhaust (40) for exhausting the steam to an external environment.

12. The heat exchanger (30) of claim 11, wherein the control device (31) is further configured to control said exhaust of steam through the exhaust (40) to the external environment.

13. A fuel cell system (20) comprising the heat exchanger (30) of any of claims 1-12.

14. A fuel cell electric vehicle (10) comprising the fuel cell system (20) of claim 13.

15. A method (100) for managing exhaust gases in a fuel cell system (20), the method (100) comprising:

receiving (110) exhaust gases generated by a fuel cell stack (27) of the fuel cell system (20);
receiving (120) heated compressed air generated by a compressor (23) of the fuel cell system (20);
controlling (130) a heat exchange between the received exhaust gases and the received heated compressed air based on respective temperatures; and
controlling (140) recirculation of the exhaust gases to the fuel cell stack (27) based on the heat exchange control.

**Amended claims in accordance with Rule 137(2) EPC.**

1. A fuel cell system (20) comprising a heat exchanger (30), a fuel cell stack (27), a compressor (23), a humidifier (26), and a turbine (24), the heat exchanger (30) comprising:

an intake exhaust gas portion (32) connected to the fuel cell stack (27) and adapted to receive exhaust gases generated by the fuel cell stack (27);
an intake heated compressed air portion (38) connected to the compressor (23) and adapted to receive heated compressed air generated by the compressor (23); and
a control device (31) configured to:

- control a heat exchange between the received exhaust gases and the received heated compressed air based on respective temperatures, and
- cause recirculation of the exhaust gases to the fuel cell stack (27) based on the heat exchange control,

**characterized in that** the intake exhaust gas portion (32) comprises:

a first intake portion (32-1) arranged between the fuel cell stack (27) and the humidifier (26),
a second intake portion (32-2) arranged between the humidifier (26) and the turbine (24), and

a third intake portion (32-3) arranged between the turbine (24) and the heat exchanger (30).

2. The fuel cell system (20) of claim 1, the heat exchanger (30) further comprising an exhaust gas recirculation member (37) via which the control device (31) causes recirculation of the exhaust gases to the fuel cell stack (27).

3. The fuel cell system (20) of claim 2, wherein the exhaust gas recirculation member (37) is connected to the fuel cell stack (27) via the humidifier (26).

4. The fuel cell system (20) of any of claims 1-3, wherein the control device (31) comprises a temperature sensor (311).

5. The fuel cell system (20) of any of claims 1-4, wherein the control device (31) comprises a flow medium control valve (312).

6. The fuel cell system (20) of any of claims 1-5, the heat exchanger (30) further comprising a charge air cooler (25) connected to the intake heated compressed air portion (38) and adapted to receive the heated compressed air, wherein the control device (31) is configured to control the heat exchange by controlling a coolant application of the charge air cooler (25) based on a temperature of the heated compressed air.

7. The fuel cell system (20) of claim 6, wherein the control device (31) is configured to control the coolant application by:

setting a first temperature limit value,
allowing the heated compressed air to pass into the charge air cooler (25) upon a temperature of the heated compressed air being below the first temperature limit value, and
allowing coolant to pass into the charge air cooler (25) upon a temperature of the heated compressed air being equal to or above the first temperature limit value.

8. The fuel cell system (20) of claim 7, wherein the control device (31) is further configured to control the coolant application by:

setting a second temperature limit value, the second temperature limit value being greater than the first temperature limit value, and
allowing only coolant to pass into the charge air cooler (25) upon a temperature of the heated compressed air being above the second temperature limit value.

9. The fuel cell system (20) of any of claims 1-8, wherein the control device (31) is further configured to obtain an ambient temperature, wherein the heat exchange control is further based on the ambient temperature.

10. The fuel cell system (20) of any of claims 1-9, the heat exchanger (30) further comprising a fuel cell exhaust conversion zone (34) connected to the intake exhaust gas portion (32) and arranged to enable absorption of heat via a heat exchange portion (36) from the heated compressed air, said absorption of heat causing conversion of water vapour included in said received exhaust gas into steam, wherein the fuel cell exhaust conversion zone (34) is connected to an exhaust (40) for exhausting the steam to an external environment.

11. The fuel cell system (20) of claim 10, wherein the control device (31) is further configured to control said exhaust of steam through the exhaust (40) to the external environment.

12. A fuel cell electric vehicle (10) comprising the fuel cell system (20) of any of claims 1-11.

13. A method (100) for managing exhaust gases in a fuel cell system (20), the method (100) comprising:

receiving (110) exhaust gases generated by a fuel cell stack (27) of the fuel cell system (20);
receiving (120) heated compressed air generated by a compressor (23) of the fuel cell system (20);
controlling (130) a heat exchange between the received exhaust gases and the received heated compressed air based on respective temperatures; and
controlling (140) recirculation of the exhaust gases to the fuel cell stack (27) based on the heat exchange control, **characterized in that** the step of receiving (110) exhaust gases is performed via an intake exhaust gas portion (32) that comprises:

a first intake portion (32-1) arranged between the fuel cell stack (27) and a humidifier (26) of the fuel cell system (20),
a second intake portion (32-2) arranged between the humidifier (26) and a turbine (24) of the fuel cell system (20), and
a third intake portion (32-3) arranged between the turbine and a heat exchanger (30) of the fuel cell system (20).

FIG. 1

FIG. 2

**FIG. 3**

**FIG. 4**

Europäisches
Patentamt

European
Patent Office

Office européen
des brevets

## EUROPEAN SEARCH REPORT

**Application Number**

EP 25 15 0685

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/044113 A1 (ANSALDO FUEL CELLS SPA [IT]; BERTONE ROBERTO [IT] ET AL.) 22 April 2010 (2010-04-22) | 1-9, 11-15 | INV.<br>H01M8/0432<br>H01M8/04007 |
| A | * the whole document * | 10 | H01M8/04111<br>H01M8/04119 |
| A | EP 3 621 138 A1 (HONEYWELL INT INC [US]) 11 March 2020 (2020-03-11) * the whole document * | 1-15 | H01M8/04701<br>H01M8/04014 |
| A | WO 2022/242865 A1 (VOLVO TRUCK CORP [SE]) 24 November 2022 (2022-11-24) * the whole document * | 1-15 | |
| A | KR 2018 0109700 A (TOYOTA MOTOR CO LTD [JP]) 8 October 2018 (2018-10-08) * the whole document * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 30 May 2025 | Schmidtbauer, H |

EPO FORM 1503 03.82 (P04C01)

## ANNEX TO THE EUROPEAN SEARCH REPORT
## ON EUROPEAN PATENT APPLICATION NO.

EP 25 15 0685

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2025

| Patent document cited in search report | Publication date | Patent family member(s) | | Publication date |
|---|---|---|---|---|
| WO 2010044113 A1 | 22-04-2010 | EP | 2356715 A1 | 17-08-2011 |
| | | WO | 2010044113 A1 | 22-04-2010 |
| EP 3621138 A1 | 11-03-2020 | EP | 3621138 A1 | 11-03-2020 |
| | | US | 2020075971 A1 | 05-03-2020 |
| WO 2022242865 A1 | 24-11-2022 | CN | 117337500 A | 02-01-2024 |
| | | EP | 4342012 A1 | 27-03-2024 |
| | | US | 2024222661 A1 | 04-07-2024 |
| | | WO | 2022242865 A1 | 24-11-2022 |
| KR 20180109700 A | 08-10-2018 | JP | 6870621 B2 | 12-05-2021 |
| | | JP | 2018163874 A | 18-10-2018 |
| | | KR | 20180109700 A | 08-10-2018 |

EPO FORM P0459

For more details about this annex : see Official Journal of the European Patent Office, No. 12/82